# EUROPEAN PATENT APPLICATION

(11) **EP 4 703 207 A1**
(43) Date of publication of application: **04.03.2026**
(21) Application number: 24196752.0
(22) Date of filing: 27.08.2024
(51) Int. Cl.: B60Q 1/50, B60R 13/04, F21S 43/50, B60R 19/50

(54) **ILLUMINATED OR ILLUMINABLE TRIM PART OF OR FOR A VEHICLE AND VEHICLE COMPRISING SUCH A TRIM PART**

(71) Applicant: HELLA Saturnus Slovenija d.o.o., 1001 Ljubljana (SI)
(72) Inventor: Licen, Matjaz, 1000 Ljubljana (SI)
(74) Representative: Behr-Wenning, Gregor

(57) **Abstract**

The present invention relates to an illuminated or illuminable trim part (221, 222, 223, 224, 225) of or for a vehicle (60), comprising a light source (101, 102, 103) for providing light, a cover unit (26) that is visible from outside, is permeable to the light and causes a color shift of the light having passed through the cover unit (26), wherein the light source (101, 102, 103) comprises a first white-colored light-emitting diode (14), a second cyan-colored light-emitting diode (16), a third light emitting diode (18) either amber colored or green colored, and a fourth light emitting diode (20) either red colored or blue colored. Moreover, the present invention is drawn to a vehicle (60) comprising such a trim part (221, 222, 223, 224, 225).

## Description

The present invention relates to an illuminated or illuminable trim part of or for a vehicle. Further, the present invention is directed to a vehicle comprising such a trim part.

### PRIOR ART

An increasing number of modern vehicles are equipped with illuminated or illuminable trim parts. External trim parts such as bumpers or illumination panels often need to be illuminated in particular colors to meet legal requirements. A common trend in modern automotive light design is "hidden-until-lit" lighting, where light is emitted through a semi-transparent cover unit. In such cases, the material of the cover unit itself can be tinted, the cover unit can be painted in a specific color (typically to match the color of the rest of the vehicle), may have a metal look (either through application of a metal-look foil, PVD, or by other processes), or some other layer is applied to the cover unit to achieve a specific look. All such layers can induce a significant color shift when light is passing through the cover unit, which needs to be corrected. Because of variation in the materials used for the cover units and tight restrictions on allowed emitted light colors from manufacturers, a light source with a fixed emission spectrum in many cases cannot achieve the required output color.

In most cases, the direction indicator light needs to be amber-colored, the reversing light, position lamp, DRL (daytime running lamp) and the headlight are white-colored and the brake light and the rear position lamp are red-colored.

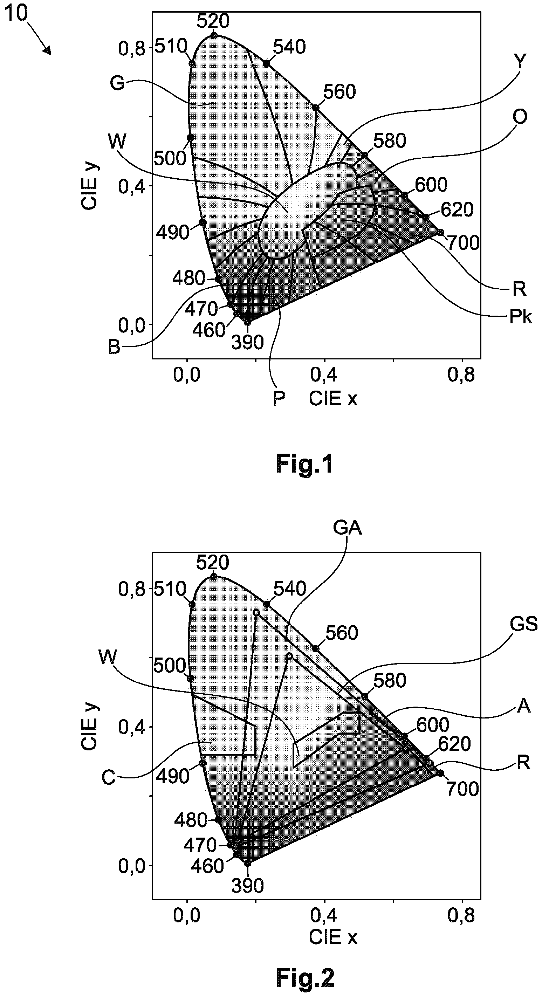

It is expected that a cyan colored "ADS (Autonomous driving system) marker lamp" will soon be required on vehicles to signal that a vehicle is operating in autonomous driving mode. Most commercial red-green-blue RGB-LEDs (light-emitting diodes) reproduce the sRGB color gamut (standard RGB color gamut) GS (see Figure 2) which does not include either the red or the amber color regions defined by automotive regulations. RGB-LEDs used in displays intended for professional use, where accurate color reproduction is needed (e.g. professional photography), are designed to display larger color gamuts, such as AdobeRGB. As amber and red are positioned at the very edge of the visible color space, even such specialized RGB sources often fail to properly reproduce these colors. Consequently, RGB sources for automotive applications have to be specially designed to be capable of reproducing both automotive amber and red colors, to fulfil legal requirements for moving vehicles which results in relatively high efforts and costs.

An example of the color gamut of an automotive-rated RGB-LED GA is also shown in Figure 2. Such RGB-LEDs can in principle reproduce the colors of all vehicular lighting functions. However, the color spectrum of the RGB-LEDs manufactured in large quantities is prone to significant variations. As a result, when different color bins of the red, green, and blue LEDs are considered, it is possible that a color is no longer inside the gamut of the RGB-LED. A color bin is a region or range in the color space defined by LED manufacturers. After production, the LEDs are measured and sorted into regions (or bins) and the customers can specify which bin they would like, in particular, how small the range in the color space should be. Since RGB LED chips contain three LEDs each, sorting the chips so that each of the three LEDs falls into the desired bins is exceedingly expensive.

In case the color coordinate of a red LED of an automotive-rated RGB-LED is slightly shifted towards blue, it will no longer be possible to reproduce an amber color as legally required. This means that the LEDs of one bin need to be selected according to stricter requirements regarding variations in the spectrum which increases the cost of the LEDs.

In addition, since at least some of the desired colors are produced by mixing, the brightness of the bins must also be narrow. The alternative is to carefully calibrate each light source to account for variation of color and brightness of each LED, which again increases costs.

Current automotive RGB-LEDs are of low power. This means that it is difficult to reach the necessary light outputs required for most lighting functions by using only RGB-LEDs.

Further information on the technical background to which the present invention relates to can be found in WO 2021/067724 A1.

It is one task of one embodiment of the present invention to present an illuminated or illuminable trim part of or for a vehicle by which the drawbacks discussed above are eliminated or at least reduced. More specifically, a trim part should be provided that can be manufactured at low costs but at the same time can be illuminated with light of the desired color and brightness. Furthermore, an embodiment of the present invention has the object to provide a vehicle that can be equipped with such a trim part.

The task is solved by the features specified in claims 1 and 11. Advantageous embodiments are the subject of the dependent claims.

One embodiment of the present invention relates to an illuminated or illuminable trim part of or for a vehicle, comprising
- a light source for providing light,
- a cover unit that
   ∘ is visible from outside,
   ∘ is permeable to the light and causes a color shift of the light having passed through the cover unit, wherein
- the light source comprises
   ∘ a first white-colored light-emitting diode,
   ∘ a second cyan-colored light-emitting diode,
   ∘ a third light emitting diode either amber colored or green colored, and
   ∘ a fourth light emitting diode either red colored or blue colored.

One of the core features of the present invention is that the light source comprises in total four colored LEDs which is already one difference to RGB-LEDs typically used in automotive applications which only comprise three LEDs. Moreover, the light source comprises a white-colored LED which means that white does not in all cases have to be mixed. When white light is produced by mixing, the resulting light is limited in brightness by the dimmest of the original LEDs. When using a white LED to generate the bulk of the light and using the rest of the LED only to correct any color shifts induced by the cover component, higher luminous fluxes can be obtained.

Further, the second LED is cyan-colored. Cyan is located at the opposite edge of the visible color space from amber (see Figure 2), which makes it challenging to produce both cyan and amber light with the same set of RGB-LEDs.

As white and cyan are produced by respectively colored LEDs, the color of the two other colored LEDs can be chosen according to the respective requirements of the colors the trim part should be illuminated with. When the trim part should be provided with the standard functions like direction indicator light and break light, the third light-emitting diode may be amber and the fourth light-emitting diode may be red. It may, however, also be possible to use the trim part or sections of the trim part for other purposes. An example may be police or emergency vehicles in which the trim part may be illuminated in a flashing blue color. In this case the fourth LED is blue colored as blue is also located towards the edge of the visible color space.

If amber is not required, it may be replaced by a green-colored LED which expands the color gamut into the yellow region. If red is not required, it may be replaced by a blue-colored LED which expands the color gamut into the blue region. However, it may also be of advantage to exchange the amber by a blue-colored LED and the red-colored LED by a green-colored LED.

In case the light source only consisted of a cyan-colored LED, an amber-colored LED and a red-colored LED, which would most probably be the most common choice in automotive applications, the mixed white tends to have a color tinge. Moreover, the cover unit of the trim part typically imposes a non-negligible color shift on the exiting light thereby also imposing a certain color tinge on the light emitted by the white LED. However, the use of a white-colored LED enables the correction of a wider color range.

Applicable automotive rated red, amber, and white LEDs are available in many varieties and are produced in large quantities, which typically results in competitive prices. A similar situation is expected with automotive cyan LEDs once ADS marker lamps become legally required. Since reproducing colors for automotive lighting according to the present invention does not require mixing, the light source is less sensitive to LED color bins. In addition, differences in brightness of the LED bins only affect the overall brightness of the lamp, not the color.

As mentioned, the cover unit is permeable to the light provided by the light source, i.e., is transparent or translucent. Even in case the cover unit is transparent, in almost all automotive applications the color of the light is shifted when running through the cover unit. This color shift may be caused when the cover unit comprises a semi-transparent body, a body painted in a specific color (typically to match the color of the rest of the vehicle), a body having a metal look (either through application of a metal-look foil, PVD, or by other processes), or in case other layers are applied to the cover unit to achieve a specific look.

In this regard, the term "visible from outside" may be understood such that a spectator, looking at the vehicle equipped with such a trim part, can see the cover unit of the trim part. Thus, the term "visible from outside" primarily relates to the trim part when mounted to a given vehicle. The color of the light emitted by the light source is chosen in consideration of the color shift caused by the cover unit upon traversing the cover unit. The color of the light that leaves the cover unit is of the desired or required color.

The trim part is primarily embodied as an exterior trim part, however, also interior trim parts can be provided accordingly.

According to another embodiment the cover unit comprises a tinted component visible from outside. The visible cover unit can be adjusted to the remaining vehicle such that it is hardly distinguishable therefrom. A "light-from-nowhere" effect can be realized.

In a further embodiment the tinted component comprises a first surface and a second surface, the first surface facing the light source, wherein a diffusive layer is applied to the first surface and/or the second surface. If sufficiently thick, the diffusive layer is a fairly simple means for mixing the light emitted by the differently colored LEDs. Moreover, the angular distribution of the light exiting the diffusive layer is widened..

In another embodiment an opaque layer is at least partially applied either to the first surface or to the diffusive layer. The opaque layer prevents the light from entering the cover unit. As a result, the cover unit remains unlit where covered with the opaque layer. The opaque layer can be applied such that a particular graphical element such as the brand logo of the vehicle manufacturer remains unlit or is illuminated.

In a further embodiment the cover unit comprises a clear body permeable to the light, the tinted component fastened to the cover unit. The tinted component may be applied to the clear body to form a tinted layer. This embodiment may provide a high manufacturing flexibility as the tinted layer can be chosen according to the color of the remaining vehicle. Apart from the tinted layer, the remaining design of the trim part can remain unchanged.

According to another embodiment the trim part comprises a reflective layer is arranged adjacent to a light source. The reflective layers act as a mixing chamber for mixing the light emitted by the differently colored LEDs. In case the trim part comprises two or more light sources, the reflective layer may be arranged between two adjacently arranged light sources to ensure proper mixing within one light source. The manufacturing effort for providing the trim part with the reflective layer is relatively low.

In a further embodiment the trim part comprises a light guide arranged between the light source and the cover unit. The light guide comprises a coupling area located adjacent to the light source where the light provided by the light source can be coupled into the light guide. Further, the light guide comprises exiting areas where the light can exit the light guide. The exiting areas are arranged such that the exiting light is directed to the cover unit. The use of a light guide has notably the advantage that the light source can be arranged remote from the cover unit. The light source and the respective electronical components may be arranged in an area where they are better protected from outer influences like moisture and temperature and where there is sufficient and readily available installation space.

In another embodiment the trim part comprises a mixing unit for mixing the light emitted by the light-emitting diodes. A mixing unit ensures that the light generated by the light source has a homogenous color.

A further embodiment the mixing unit comprises a mixing rod arranged between the light guide and the light source. A mixing rod is a simple component and improves the color homogeneity of the light provided by the light source.

According to another embodiment the mixing unit comprises at least one optical unit for focusing and/or mixing the light emitted by the light-emitting diodes. The optical unit collects the light emitted from the light source thereby increasing the brightness of the light as the amount of light not reaching the cover unit can be reduced. Moreover, the optical unit may be provided with mixing properties to mix the light emitted by the light sources. As an example, the optical unit may comprise a wavelength selective mirror which for example reflects cyan and is permeable to red. As a result, red and cyan are mixed which may lead to a turquoise-colored light. Optical units are notably effective for directing light to the desired surface such that a high brightness and a high luminous flux is obtained.

An additional aspect of the present refers to a vehicle, comprising a trim part according to one of the embodiments previously discussed. The technical effects and advantages as discussed with regard to the present method to a large extent equally apply to the system. Applicable automotive rated red, amber, and white LEDs are available in many varieties and are produced in large quantities, which typically results in competitive prices. A similar situation is expected with automotive cyan LEDs once ADS marker lamps become legally required. Since reproducing colors for automotive lighting according to the present invention does not require mixing, the light source is less sensitive to LED color bins. In addition, differences in brightness of the LED bins only affect the overall brightness of the lamp, not the color.

### PREFERRED EMBODIMENTS OF THE INVENTION

The present invention is described in detail with reference to the drawings attached wherein
- Figure 1: is a CIE chromatographic diagram subdivided into areas according to the main colors,
- Figure 2: is a CIE chromatographic diagram showing the sRGB gamut and the automotive-rated RGB gamut,
- Figure 3A: is a principle drawing of a first embodiment of a light source that can be used in one of the trim parts according to the present invention,
- Figure 3B: is an arrangement of a plurality of the light sources shown in Figure 3A,
- Figure 4: is a CIE chromatographic diagram showing the gamut of the first embodiment of the light source,
- Figure 5: is a CIE chromatographic diagram showing the gamut of a second embodiment of the light source,
- Figure 6: is a CIE chromatographic diagram showing the gamut of a third embodiment of the light source,
- Figure 7: is a principle section view through a first embodiment of an illuminated or illuminable trim part,
- Figure 8: is a principle section view through a second embodiment of an illuminated or illuminable trim part,
- Figure 9: is a principle section view through a third embodiment of an illuminated or illuminable trim part,
- Figure 10: is a principle section view through a fourth embodiment of an illuminated or illuminable trim part,
- Figure 11: is a principle section view through a fifth embodiment of an illuminated or illuminable trim part,
- Figure 12: is a principle drawing of a first embodiment of an optical unit for use in one embodiment of the illuminated or illuminable trim part,
- Figure 13: is a principle drawing of a first embodiment of an optical unit for use in one embodiment of the illuminated or illuminable trim part, and
- Figure 14: is a principle top view on a vehicle equipped with a trim part according to one of the embodiments shown in the other Figures.

Figure 1 is a CIE chromatographic diagram subdivided into areas according to the main colors and is shown for introductory purposes. The areas representing the main colors are marked. G denominates the green area, B the blue area, P the purple area, PK the pink area, R the red area, O the orange area, Y the yellow area and W the white area. The other areas delimit areas of intermediate colors. As an example, the colors between the blue area B and the green area G gradually change from blue to green.

Figure 2 shows the same CIE chromatographic diagram as in Figure 2, however, the sRGB gamut GS (standard RGB) and the automotive-rated RGB gamut GA is given. Moreover, the amber area A, the red area R, the cyan area C and the white area W are indicated in compliance with the respective legal requirements for automotive applications. Most commercially available RGB LEDs reproduce the sRGB color gamut GS which does not include either the red or the amber color regions defined by automotive regulations. Because automotive amber and red are positioned at the edge of the visible color space, even automotive-rated RGB LEDs often fail to properly reproduce these colors (see Gamut GA). Consequently, RGB light sources 101 for automotive applications have to be specially designed to be capable of reproducing both automotive amber and red colors, which will result in comparatively high costs.

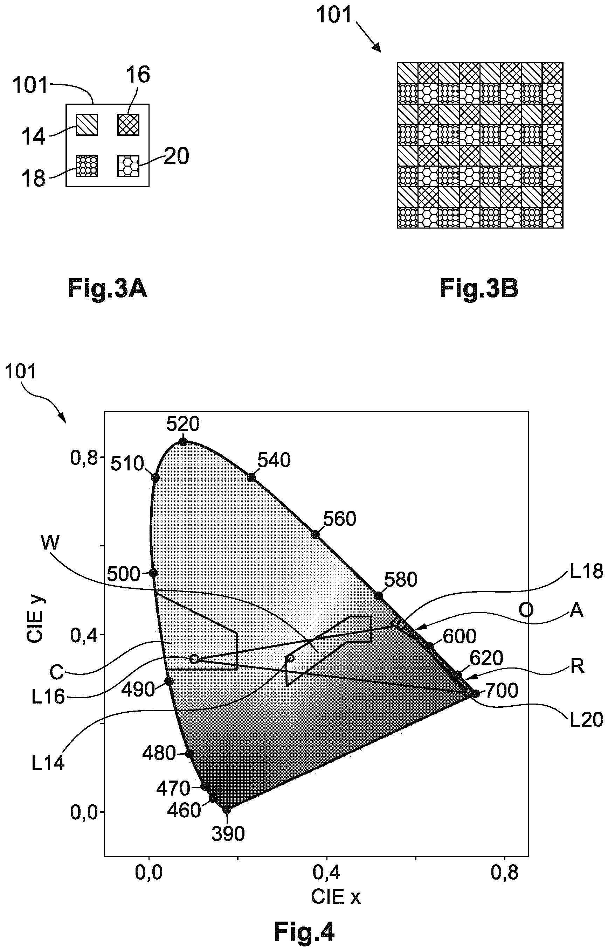

Figure 3A is a principle drawing of a first embodiment of a light source 101 that can be used in one of the trim parts according to the present invention. The light source 101 comprises a first white-colored light-emitting diode 14, a second cyan-colored light-emitting diode 16, a third light emitting diode 18 that is amber colored, and a fourth light emitting diode 20 that is red colored.

Figure 3B is a principle drawing of a plurality of light sources 101 according to Figure 3A arranged in an array. The four LEDS of one light source 101 are small enough that they represent one pixel such that certain images may be displayed.

Figure 4 is a is a CIE chromatographic diagram showing the gamut of the first embodiment of the light source 101 shown in Figure 3A. The position L14 of the first LED 14, position L16 of the second LED 16, the position L18 of the third LED 18 and the position L20 of the fourth LED 20 in the chromatographic diagram are indicated in Figure 4. The lines connecting the position L16 of the second LED 16, the position L18 the third LED 18 and the position L20 of the fourth LED 20 delimit the color gamut of the light emitted by the light source 101 that can be obtained by mixing. Although the gamut of the first embodiment of the light source 101 is smaller compared to the gamut of the sRGB gamut GS and the automotive-rated RGB gamut GA, the colors cyan, amber, red and white which are of noticeable interest in automotive applications do not have to be mixed. The LEDs other than the white-colored LED are mainly used to compensate for the color shift which enables the creation of a bright white of high luminous fluxes.

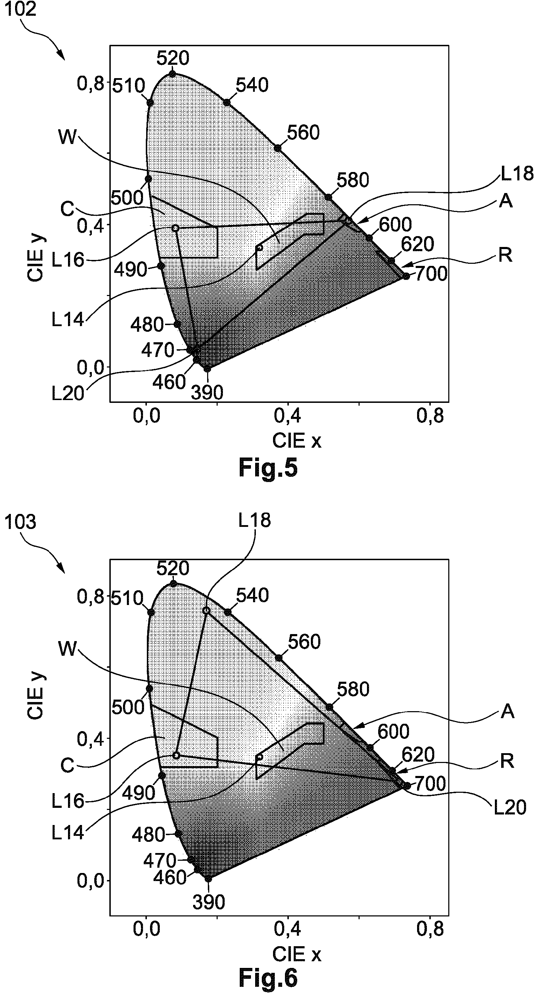

Figure 5 is a CIE chromatographic diagram showing the gamut of a second embodiment of the light source 102 in which the fourth light emitting diode 20 is not red-colored but blue colored. The second embodiment of the light source 102 may be interesting in applications where red is not required but blue. When compared to the gamut of the light source 101 of the first embodiment given in Figure 4, one can see that the gamut of the light source 102 of the second embodiment is significantly larger and extends to the blue area.

Figure 6 is a CIE chromatographic diagram showing the gamut of a third embodiment of the light source 103 in which the third light emitting diode 18 is not amber-colored but green colored. This embodiment of the light source 103 may be interesting in applications where amber is not required. When compared to the gamut of the light source 101 of the first embodiment given in Figure 4, one can see that the gamut of the light source 103 of the third embodiment is significantly larger and extends to the green area.

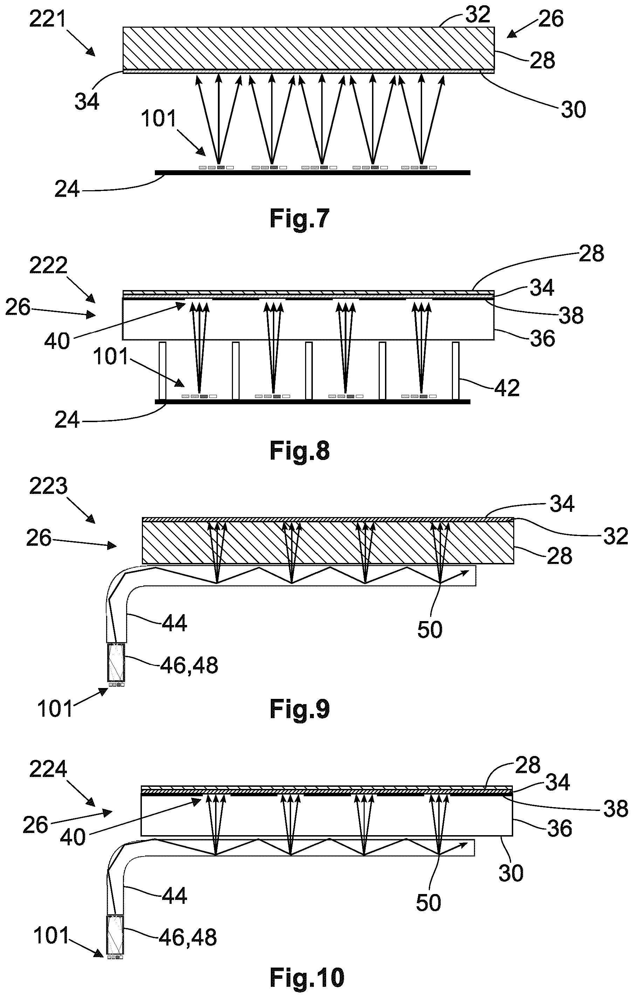

Figure 7 is a principle sectional view through a first embodiment of an illuminated or illuminable trim part 221 according to the present invention. The trim part 221 comprises four light sources 101 for example according to the first example shown in Figure 3A. However, the representation and the number of light sources 101 are only chosen for demonstrative purposes only and not in any way binding or true to scale. The light sources 101 are mounted on a carrier component 24.

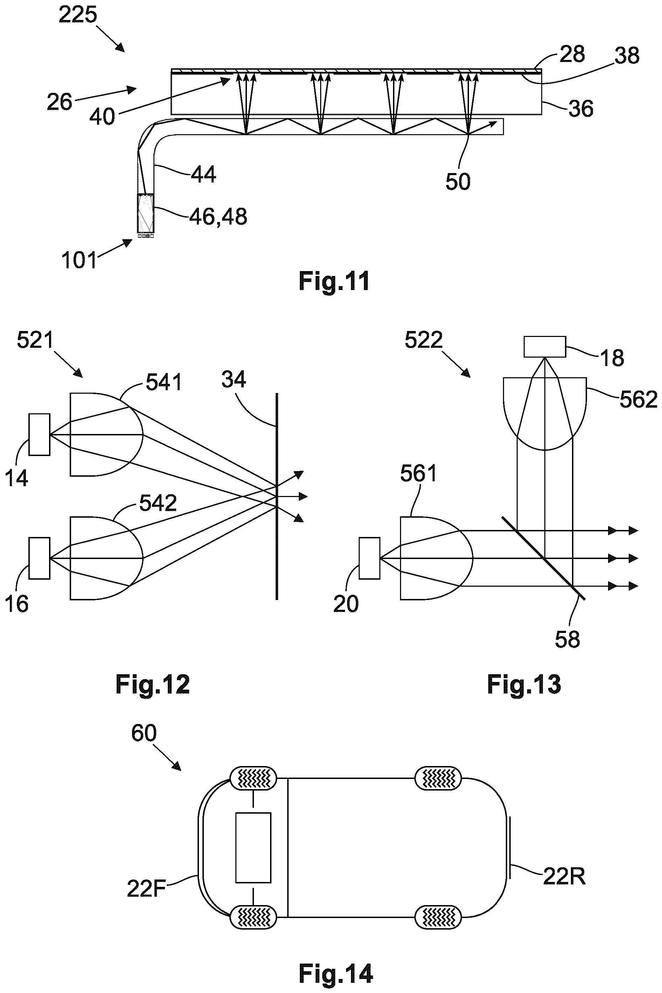

The trim part 221 comprises a cover unit 26 having a tinted component 28 that is visible from outside when mounted to a vehicle (see Figure 14). The tinted component 28 has a first surface 30 and a second surface 32, the first surface 30 facing the light sources 101. A diffusive layer 34 is applied to the first surface 30 or the second surface 32 (the latter option is not shown). The diffusive layer 34 widens the angular distribution of the light emitted by the four colored LEDs 14, 16, 18, 20 before entering the tinted component 28, thereby making the illumination of the tinted component 28 visible from a wider viewing angle. The tinted component 28 causes a color shift of the light running therethrough. The occurring color shift is usually a priori known and can be considered in the color of the light source 101 such that the light leaving the trim part 221 is conceived by a spectator outside the trim part 221 in the desired color.

Figure 8 shows a second embodiment of the trim part 222. In this embodiment, the cover unit 26 comprises a transparent or clear body 36 also permeable to the light emitted by the light source 101. However, it is noted that the light penetrating the clear body 36 also undergoes a color shift, albeit usually to a small degree. An opaque layer 38 is partially applied to the clear body 36 leaving gaps 40 through which the light can run. Also in the second embodiment, the cover unit 26 comprises a diffusive layer 34 which is applied to the clear body 36, however, on the surface facing away from the light source 101. The tinted component 28 is embodied as a tinted layer and applied to the diffusive layer 34. The light provided by the light source 101 can only enter the clear body 36 inside the gaps 40, thereby creating a certain pattern. The pattern may be a graphical element such as the brand logo of the vehicle manufacturer or a symbol that may transport information to other road users.

Moreover, a reflective layer 42 is arranged between two adjacent light sources 101, the reflective layer 42 extending between the carrier component 24 and the clear body 36. The light emitted by one of the light sources 101 is reflected when impinging on the reflective layer 42 and thereby kept within a certain corridor. The stochastic nature of the reflections from the reflective layer 42 mixes the light of different color emitted by the four LEDs before entering the clear body 36.

In Figure 9 a third embodiment of the trim part 223 is shown. As in the first embodiment of the trim part 221, the trim part 223 of the third embodiment comprises a tinted component 28. In the third embodiment, the diffusive layer 34 is applied to the second surface 32 of the tinted component 28. Beyond that, the trim part 221 comprises a light guide 44 and a mixing unit 46 embodied as a mixing rod 48. It is noted that the light guide 44 may be used with any configuration of the cover unit 26. The mixing rod 48 is positioned between the light source 101 and the light guide 44. Thus, the light emitted by the light source 101 is first mixed before introduced into the light guide 44. Inside the light guide 44, the light is directed towards the diffusive layer 34. The light guide 44 is equipped with a plurality of exiting areas 50 where the light can exit the light guide 44. The exiting areas 50 can be designed such that the light can only exit the light guide 44 at particular locations, as shown in Figure 9. Alternatively or cumulatively, the exiting areas 50 may be continuous such that the light enters the tinted component 28 via a continuous and larger area of the first surface 30.

In Figure 10 a fourth embodiment of the trim part 224 is illustrated. The trim part 224 according to the fourth embodiment is to a large extent similar to the trim part 223 of the third embodiment, however, the trim part 224 comprises a clear body 36 on which a diffusive layer 34 is applied. Further, a tinted component 28, embodied as a tinted layer, is applied to the diffusive layer 34. An opaque layer 38 is provided between the clear body 36 and the diffusive layer 34 such that the gaps 40 are obtained.

Figure 11 shows a fifth embodiment of the trim part 225 which is largely similar to the trim part 224 of the fourth embodiment. An opaque layer 38 is partially applied to the clear body 36 forming the already mentioned gaps 40. A tinted component 28 embodied as a tinted layer is applied directly to the clear body 36.

It should be noted that in particular the arrangement of the diffusive layer 34 and the opaque layer 38 on the clear body 36 and the tinted component 28 can be freely chosen such that combinations other than the ones shown in Figures 7 to 11 can be obtained without departing from the scope of the present invention.

Figure 12 shows a first embodiment of an optical unit 521 that may for example be incorporated into the first embodiment of the inventive trim part 221. By means of a first collecting lens 541, the light emitted by a first LED 14 is focused on a diffusive layer 34 that is applied e.g. to a tinted component 28 (not shown in Figure 12). In analogy, the light emitted by a second LED 16 is focused on the diffusive layer 34 by a second collecting lens 542. As a result, a kind of focal point on the diffusive layer 34 is obtained. The white light of the first LED 14 and the cyan light of the second LED 16 is mixed on the diffusive surface and the mixed light homogenously transferred.

Figure 13 shows a second embodiment of an optical unit 522 that may be incorporated into one embodiment of the inventive trim part 221 to 225. In this case, a first collimator lens 561 is used to align the light emitted by the fourth LED 20 and direct it to a wavelength-specific mirror 58. The third LED 18 is arranged perpendicular to the fourth LED 20. The light emitted by the fourth LED 20 is aligned by a second collimator lens 562 and directed to the wavelength-specific mirror 58. The wavelength-specific mirror 58 encloses an angle of 45° with the optical axis defined by the first collimator lens 561 and the second collimator lens 562. The wavelength-specific mirror 58 is permeable to the red light emitted by the fourth LED 20 but reflects the amber light emitted by the third LED 18. Due to the angular arrangement of the wavelength-specific mirror 58 the amber light emitted by the third LED 18 after reflection is travelling in the same direction as the red light emitted by the fourth LED 20. Consequently, the red light and the amber light are mixed.

Figure 14 shows a principle top view of a vehicle 60 that is equipped with a front trim part 22F and a rear trim part 22R according to one of the embodiments previously presented. The front trim part 22F is embodied as a front bumper while the rear trim part 22R is embodied as a rear display panel. Not shown is an example in which the vehicle 60 is equipped with trim parts 22 that are embodied as B-pillars, door panels or the like.

### REFERENCE LIST

101 - 103 light source
14 first light-emitting diode
16 second light-emitting diode
18 third light-emitting diode
20 fourth light-emitting diode
221 - 225 trim part
22F front trim part
22R rear trim part
24 carrier component
26 cover unit
28 tinted component
30 first surface
32 second surface
34 diffusive layer
36 clear body
38 opaque layer
40 gap
42 reflective layer
44 light guide
46 mixing unit
48 mixing rod
50 exiting area
521, 522 optical unit
541, 542 collecting lens
561, 562 collimator lens
58 wavelength-specific mirror
60 vehicle
L14 position of first light-emitting diode
L16 position of second light-emitting diode
L18 position of third light-emitting diode
L20 position of fourth light-emitting diode
A amber area
C cyan area
G green area
O orange area
P purple area
Pk pink area
R red area
W white area
Y yellow area
GA gamut automotive-rated RGB
GS gamut standard RGB

## Claims

1. Illuminated or illuminable trim part (221, 222, 223, 224, 225) of or for a vehicle (60), comprising
- a light source (101, 102, 103) for providing light,
- a cover unit (26) that
∘ is visible from outside,
∘ is permeable to the light and causes a color shift of the light having passed through the cover unit (26), wherein
- the light source (101, 102, 103) comprises
∘ a first white-colored light-emitting diode (14),
∘ a second cyan-colored light-emitting diode (16),
∘ a third light emitting diode (18) either amber colored or green colored, and
∘ a fourth light emitting diode (20) either red colored or blue colored.

2. Illuminated or illuminable trim part (221, 222, 223, 224, 225) according to claim 1,
**characterized in that** the cover unit (26) comprises a tinted component (28) visible from outside.

3. Illuminated or illuminable trim part (221, 222, 223, 224, 225) according to claim 2,
**characterized in that** the tinted component (28) comprises a first surface (30) and a second surface (32), the first surface (30) facing the light source (101, 102, 103), wherein a diffusive layer (34) is applied to the first surface (30) and/or the second surface (32).

4. Illuminated or illuminable trim part (221, 222, 223, 224, 225) according to one of the preceding claims or according to claim 3,
**characterized in that** an opaque layer (38) is at least partially applied either to the first surface (30) or to the diffusive layer (34).

5. Illuminated or illuminable trim part (221, 222, 223, 224, 225) according to claim 2,
**characterized in that** the cover unit (26) comprises a clear body (36) permeable to the light, the tinted component (28) fastened to the cover unit (26).

6. Illuminated or illuminable trim part (221, 222, 223, 224, 225) according to one of the preceding claims,
**characterized in that** the trim part (221, 222, 223, 224, 225) comprises a reflective layer (42) which is arranged adjacently to the light source (101, 102, 103).

7. Illuminated or illuminable trim part (221, 222, 223, 224, 225) according to one of the preceding claims,
**characterized in that** the trim part (221, 222, 223, 224, 225) comprises a light guide (44) arranged between the light source (101, 102, 103) and the cover unit (26).

8. Illuminated or illuminable trim part (221, 222, 223, 224, 225) according to one of the preceding claims,
**characterized in that** the trim part (221, 222, 223, 224, 225) comprises a mixing unit (46) for mixing the light emitted by the light-emitting diodes (14, 16, 18, 20).

9. Illuminated or illuminable trim part (221, 222, 223, 224, 225) according to one of the claims 7 or 8,
**characterized in that** the mixing unit (46) comprises a mixing rod (48) arranged between the light guide (44) and the light source (101, 102, 103).

10. Illuminated or illuminable trim part (221, 222, 223, 224, 225) according to one of the claims 8 or 9,
**characterized in that** the mixing unit (46) comprises at least one optical unit (541, 542) for focusing and/or mixing the light emitted by the light-emitting diodes (14, 16, 18, 20).

11. Vehicle (60), comprising a trim part (221, 222, 223, 224, 225) according to one of the preceding claims.
